# EUROPÄISCHE PATENTSCHRIFT

(11) **EP 1 474 946 B1**
(45) Veröffentlichungstag und Bekanntmachung des Hinweises auf die Patenterteilung: **02.01.2008**
(21) Anmeldenummer: 03706299.9
(22) Anmeldetag: 07.02.2003
(51) Int. Cl.: H04Q 7/38

(54) **VERFAHREN UND ENTSPRECHENDE VORRICHTUNGEN ZUR VERWALTUNG VON FUNKRESSOURCEN IN EINEM FUNK-KOMMUNIKATIONSSYSTEM**
METHODS AND CORRESPONDING DEVICES FOR MANAGEMENT OF RADIO RESOURCES IN A RADIO COMMUNICATION SYSTEM
PROCEDES ET DISPOSITIFS DE GESTION DE RESSOURCES RADIO DANS UN SYSTEME DE COMMUNICATION RADIO

(30) Priorität: 11.02.2002 DE 10205575; 04.04.2002 DE 10214934
(43) Veröffentlichungstag der Anmeldung: 10.11.2004
(73) Patentinhaber: SIEMENS AKTIENGESELLSCHAFT, 80333 München (DE)
(72) Erfinder: KRÖNER, Hans, 73312 Geislingen-Weiler (DE); MAYER, Jürgen, 89134 Blaustein (DE)
(86) Internationale Anmeldenummer: PCT/DE2003/000355
(87) Internationale Veröffentlichungsnummer: WO 2003/069938

(56) Entgegenhaltungen:
- EP-A- 1 058 473
- WO-A-00/35226
- US-B1- 6 198 937
- "3GPP TR 25.891 V0.1.1: 3rd Generation Partnership Project;Technical Specification Group Radio Access Network; Improvement of RRM across RNS and RNS/BSS (Post Rel-5); (Release 6)" 3GPP TR 25.891 V0.1.10, XX, XX, Oktober 2002 (2002-10), Seiten 1-21, XP002227867

## Beschreibung

Die Erfindung betrifft ein Verfahren zur Verwaltung von Funkressourcen in einem Funk-Kommunikationssystem, insbesondere zur Steuerung einer Intersystem-Verbindungsweiterschaltung, sowie zentrale und dezentrale funktionale Einheiten mit Mitteln zum Durchführen des erfindungsgemäßen Verfahrens.

In Funk-Kommunikationssystemen, beispielsweise dem europäischen Mobilfunksystem der zweiten Generation GSM (Global System for Mobile Communications), werden Informationen (beispielsweise Sprache, Bildinformation oder andere Daten) mit Hilfe von elektromagnetischen Wellen über eine Funkschnittstelle übertragen. Die Funkschnittstelle bezieht sich auf eine Verbindung zwischen einer Basisstation und Teilnehmerstationen, wobei die Teilnehmerstationen Mobilstationen oder ortsfeste Funkstationen sein können. Das Abstrahlen der elektromagnetischen Wellen erfolgt dabei mit Trägerfrequenzen, die in einem für das jeweilige System vorgesehenen Frequenzband liegen. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen. Für die dritte Mobilfunkgeneration sind zwei Modi vorgesehen, wobei ein Modus einen FDD-Betrieb (frequency division duplex) und der andere Modus einen TDD-Betrieb (time division duplex) bezeichnet. Diese Modi finden in jeweils unterschiedlichen Frequenzbändern ihre Anwendung. Beide Modi unterstützen ein sogenanntes CDMA-Teilnehmerseparierungsverfahren (Code Division Multiple Access).

Diese unterschiedlichen Funk-Kommunikationssysteme werden zukünftig parallel in einer gleichen geographischen Region existieren. Jedes dieser Systeme weist dabei eine eigene Verwaltung der jeweils zur Verfügung stehenden Funkressourcen auf. Dies wird auch als Radio Ressourcen Management (RRM) bezeichnet. In den bekannten Systemen wie GSM und UMTS ist diese Funktionalität in der Basisstationssteuerung (BSC - Base Station Controller) bzw. in der Funknetzsteuerung (RNC - Radio Network Controller) realisiert. Teile dieser Funktionalität können auch in dem Teilnehmerendgerät (UE - User Equipment) verwirklicht sein. Zukünftige Teilnehmerendgeräte werden einen Zugang zu mehreren Funk-Kommunikationssystemen ermöglichen, diese Endgeräte werden als so genannten Multimode-Entgeräte bezeichnet. Zwischen den verschiedenen Funk-Kommunikationssystemen wird eine so genannte Intersystem-Verbindungsweiterschaltung (ISHO - Inter System Handover) verwirklicht werden, die einem Endgerät ermöglicht, eine in einem System aufgebaute Verbindung in einem anderem System fortzuführen bzw. aufrecht zu erhalten.

Derzeit existiert keine Koordination zwischen den RRM-Funktionalitäten der verschiedenen Systeme im Sinne einer zentralen Funkressourcen-Verwaltung (CRRM - Common Ressource Management). Eine Intersystem-Verbindungsweiterschaltung erfolgt daher "blind", d.h. ohne Wissen der aktuellen Lastsituation des Zielsystems bzw. der Zielfunkzelle. Eine systemübergreifende Lastverteilung bzw. -verwaltung ist somit nicht möglich.

Im Rahmen der 3GPP-Standardisierung (3^{rd} Generation Partnership Program) des UMTS-Systems werden verschiedene Ansätze zur Lösung dieses Problems diskutiert. Aus dem Dokument 3GPP 3G TR 25.881, V0.4.0 (2001-11) "Improvement of RRM across RNS and RNS/BSS (Rel 5)" sind hierzu zwei Lösungsansätze bekannt. Ein erster Vorschlag sieht einen physikalischen CRRM-Server vor, der die gesamte Prozedur der Intersystem-Verbindungsweiterschaltung steuert. Dieser Vorschlag besitzt den Nachteil, dass aufgrund dieses zentralen Servers der Vorgang der Weiterschaltung zusätzlich verzögert wird, zudem wird der Austausch von Informationen zwischen dem zentralen CRRM-Server und dem dezentralen RRM-Knoten (bspw. RNC, BSC) des Systems sehr zeitkritisch. Ein zweiter Vorschlag sieht an jedem RRM-Knoten eine Schnittstelle zum Austausch von Messungen der Funkzelllast mit anderen RRM-Knoten benachbarter Systeme vor. Die Entscheidung über eine Intersystem-Verbindungsweiterschaltung obliegt einzig dem jeweiligen RRM-Knoten. Dieser Vorschlag besitzt den Nachteil, dass es keine einheitliche CRRM-Strategie gibt, da RRM-Knoten von verschiedenen Herstellern oder Systembetreibern unterschiedliche CRRM-Strategien implementieren können, die gegebenenfalls nicht zueinander kompatibel sind.

Aus der US 6 198 937 B1 ist ein Verfahren zur Steuerung von Funkverbindungs-Kapazitäten in einem Kommunikationssystem bekannt, bei dem eine so genannte globale Kapazitätssteuerung Qualitäts-Metrik-Berichte von mehreren Funkübertragungstechnologien empfängt. Die Qualitäts-Metrik-Berichte enthalten dabei Information über Qualitäten von Funkübertragungen zwischen Basisstationen und Mobilstationen der jeweiligen Übertragungstechnologie. Abhängig von diesen Berichten steuert die globale Kapazitätssteuerung einen Handover zwischen den Übertragungstechnologien bzw. einen Auf- oder Abbau von Verbindungen in den jeweiligen Technologien.

Aufgabe der Erfindung ist es daher, ein Verfahren sowie Systemkomponenten anzugeben, welche die Nachteile der beschriebenen Lösungen umgehen. Diese Aufgabe wird durch die Merkmale der unabhängigen Patentansprüche gelöst. Vorteilhafte Weiterbildungen der Erfindung sind abhängigen Patentansprüchen entnehmbar.

Gemäß einem ersten Aspekt der Erfindung wird eine zentrale funktionale Einheit zur gemeinsamen Verwaltung der Funkressourcen, insbesondere im Sinne eines CRRM, verwirklicht, die mit den beteiligten dezentralen funktionalen Einheiten, beispielsweise RRM-Knoten, kommuniziert. Die zentrale funktionale Einheit empfängt von den dezentralen funktionalen Einheiten Informationen, beispielsweise Messungen, bezüglich einer Auslastung, beispielsweise bezüglich einer Funkzelllast, und steuert die Intersystem-Verbindungsweiterschaltung durch die Definition einer Verfahrensweise zur Intersystem-Verbindungsweiterschaltung, die zu den dezentralen funktionalen Einheiten signalisiert wird. Die dezentralen funktionalen Einheiten sind für die Ausführung der Intersystem-Verbindungsweiterschaltung entsprechend dem vorgegebenen Verfahrensweise verantwortlich. Hierdurch ist die zentrale funktionale Einheit nicht direkt in die Entscheidung zur Intersystem-Verbindungsweiterschaltung involviert, wodurch vorteilhaft keinerlei Echtzeit-Anforderungen erfüllt werden müssen. Weiterhin kann eine Hersteller- bzw. Betreiber-unabhängige globale CRRM-Strategie verfolgt werden.

Gemäß einem zweiten Aspekt der Erfindung werden in der zentralen funktionalen Einheit die Informationen der dezentralen funkionalen Einheiten ausgewertet und eine Rangfolge von potenziellen Zielen zur Steuerung der Intersytem-Verbindungsweiterschaltung bestimmt. Diese bestimmte Rangfolge wird anschließend zumindest einer der dezentralen funktionalen Einheiten zur Verfügung gestellt.

Einer vorteilhaften Weiterbildung zufolge werden die dezentralen funktionalen Einheiten in funktionale Untereinheiten aufgespalten. Dabei treffen mobile funktionale Untereinheiten, beispielsweise Mobilstationen von Teilnehmern, eine Entscheidung über einen Zeitpunkt und/oder ein Ziel einer Intersystem-Verbindungsweiterschaltung. Weiterhin definieren direkt mit der zentralen funktionalen Einheit kommunizierende netzwerkgebundene funktionale Untereinheiten anhand der von der zentralen funktionalen Einheit erhaltenen Informationen Regeln und/oder Parameter für die Intersystem-Verbindungsweiterschaltung. Die netzwerkgebundenen funktionalen Untereinheiten signalisieren anschließend die Regeln und/oder Parameter den mobilen funktionalen Untereinheiten, die wiederum diese Regeln und/oder Parameter bei der Intersystem-Verbindungsweiterschaltung berücksichtigen.

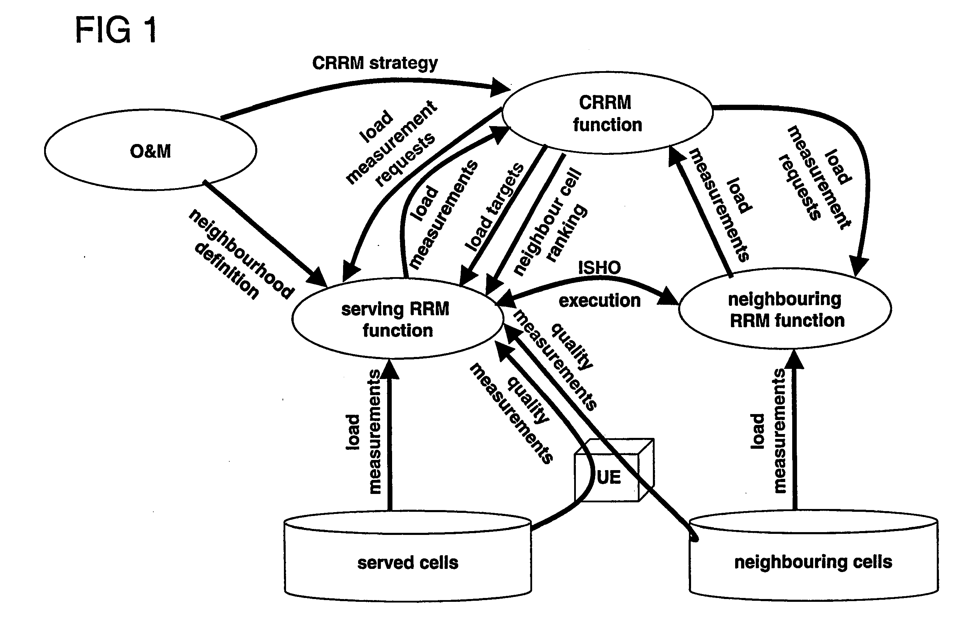

Die Erfindung wird nachfolgend anhand eines Ausführungsbeispiels und Bezug nehmend auf FIG 1 näher erläutert. Dabei zeigt
- FIG 1: die funktionalen Schnittstellen zur Implementierung des gemeinsamen Verwaltung von Funkressourcen.

Die FIG 1 zeigt die Schnittstellen und den Signalisierungsfluss zwischen den Einheiten eines oder mehrerer Systeme. Die nachfolgend für eine Intersystem-Verbindungsweiterschaltung beschriebenen Verfahrensschritte können in gleicher Weise auf eine Intrasystem-Verbindungsweiterschaltung angewendet werden.

Ein Teilnehmerendgerät UE wird über versorgende Funkzellen (served cells) mit Funkressourcen versorgt. Die Verwaltung der Funkressourcen in den versorgenden Funkzellen (served cells) erfolgt in einer ersten dezentralen funktionalen Einheit (serving RRM function). Die erste dezentrale funktionale Einheit bekommt von dem Teilnehmerendgerät neben Messungen zur Übertragungsqualität (quality measurements) zu zumindest einer der versorgenden Funkzellen auch Messungen zur Übertragungsqualität zu zumindest einer der benachbarten Funkzellen (neighbouring cells) eines parallelen Funk-Kommunikationssystems, das für eine Intersystem-Verbindungsweiterschaltung (ISHO execution) in Betracht kommt. Welche benachbarten Funkzellen bzw. welches benachbarte Funk-Kommunikationssystem in Betracht kommt (neighbourhood definition), wird der ersten dezentralen funktionalen Einheit gegebenenfalls von einem so genannten Betriebs- und Wartungszentrum (O&M - Operation and Maintenance) signalisiert. Dieses Betriebs- und Wartungszentrum kann weiterhin gegebenenfalls die systemspezifische- oder globale Strategie der zentralen Funkressourcen-Verwaltung (CRRM strategy) der zentralen funktionalen Einheit zur gemeinsamen Funkressourcen-Verwaltung (CRRM function) vorgeben. Neben den Messungen zur Übertragungsqualität empfängt die erste dezentrale funktionale Einheit Messungen einer jeweilige Auslastung (load measurements) der mit ihr verbundenen versorgenden Funkzellen. Diese Messungen signalisiert die erste dezentrale funktionale Einheit nach einer Anfrage (load measurement request) zu der zentralen funktionalen Einheit. Gleiches erfolgt in der zweiten dezentralen Einheit (neighbouring RRM function). Nach Auswertung der Informationen bestimmt die zentrale funktionale Einheit eine Ziel-Auslastung (load target) und/oder eine Rangfolge der benachbarten Funkzellen (neighbour cell ranking) und signalisiert dieses zu der ersten dezentralen funktionalen Einheit. Unter Berücksichtigung dieser Informationen bzw. der dadurch definierten Verfahrensweise steuert die erste dezentrale funktionale Einheit nachfolgend die Intersystem-Verbindungsweiterschaltung (ISHO execution).

Die CRRM-Verfahrensweise wird den dezentralen funktionalen Einheiten somit durch eine Definition der Ziel-Auslastung der unter ihrer Verantwortung stehenden Funkzellen und durch die Definition einer Rangfolge der benachbarten Funkzellen vorgegeben. Die dezentrale funktionale Einheit kann abhängig von diesen Vorgaben eine geeignete Funkzelle bzw. ein geeignetes System für die Intersystem-Verbindungsweiterschaltung auswählen. Alternativ zu der in FIG 1 angegebenen Struktur kann es erfindungsgemäß auch mehrere zentrale funktionale Einheiten geben, die untereinander Rangfolgen und/oder Last-Messungen austauschen.

Die funktionalen Einheiten können auf verschiedene Arten in einem Funk-Kommunikationssystem implementiert werden.
- die zentrale funktionale Einheit ist in einem oder mehreren CRRM-Servern verwirklicht. Die dezentralen funktionalen Einheiten sind ausschließlich in den bekannten Funknetzknoten, wie beispielsweise dem RNC oder BSC, verwirklicht, die von der Intersystem-Verbindungsweiterschaltung betroffen sind.
- die zentrale funktionale Einheit ist in einem oder mehreren CRRM-Servern verwirklicht. Die dezentralen funktionalen Einheiten sind in den bekannten Funknetzknoten, wie beispielsweise dem RNC oder BSC, und in dem Teilnehmerendgerät verwirklicht. Die Rangfolgen der Nachbar-Funkzellen werden zu den Teilnehmerendgeräten übertragen, beispielsweise durch Rundsendenachrichten, die von einer Intersystem-Verbindungsweitschaltungs-Entscheidung betroffen sind.
- Die zentralen funktionalen Einheiten sind in einem, mehreren oder allen Funknetzknoten, wie beispielsweise dem RNC oder BSC, verwirklicht. Die Verfahrensweise beispielsweise in Form der Rangfolgen der jeweiligen Nachbarzellen wird zwischen diesen Funknetzknoten ausgetauscht. Die dezentralen funktionalen Einheiten sind ebenfalls, ggf. ausschließlich, in Funknetzknoten, wie beispielsweise dem RNC oder BSC, verwirklicht, die von der Intersystem-Verbindungsweiterschaltungs-Entscheidung betroffen sind oder diese unterstützen.
- Die zentralen funktionalen Einheiten sind in einem, mehreren oder allen Funknetzknoten, wie beispielsweise dem RNC oder BSC, verwirklicht. Die Verfahrensweise beispielsweise in Form der Rangfolgen der jeweiligen Nachbar-Funkzellen wird zwischen diesen Funknetzknoten ausgetauscht. Die dezentralen funktionalen Einheiten sind ebenfalls, ggf. ausschließlich, in Funknetzknoten, wie beispielsweise dem RNC oder BSC, und den Teilnehmerendgeräten verwirklicht. Die Rangfolgen der Nachbar-Funkzellen werden zu den Teilnehmerendgeräten übertragen, beispielsweise durch Rundsendenachrichten, die von einer Intersystem-Verbindungsweitschaltungs-Entscheidung betroffen sind oder diese unterstützen.

In den letzten beiden Implementierungsmöglichkeiten kann das Teilnehmerendgerät-über die Verfahrensweise beispielsweise mittels einer Anpassung der Parameter zur Funkzellauswahl (Cell(Re)Selection) und/oder der Parameter für das Berichten der Interfrequenz- und Intersystem-Messungen informiert werden. Hierdurch können vorteilhaft bekannte Prozeduren auf der Funkschnittstelle eingesetzt werden, um das Teilnehmerendgerät zur Durchführung einer Intersystem-Verbindungsweiterschaltung oder einer Intersystem-Funkzellenauswahl (Inter System Cell Reselection) derart zu leiten, dass die Funkzelllast einen geeigneten Zielwert erreicht.

Nachfolgend wird nochmals unabhängig von dem beschriebenen Beispiel die Realisierung der erfindungsgemäßen Lösung im Umfeld des einleitend beschriebenen Stand der Technik beschrieben.

Aufgabe der gemeinsamen Funkressourcen-Verwaltung (CRRM) ist die zentrale Verwaltung der Last. Dieses kann die Verwaltung der Last zwischen verschiedenen Funk-Kommunikationssystemen oder aber auch zwischen verschiedenen Schichten bzw. Hierarchieebenen innerhalb eines Funk-Kommunikationssystems sein. Die Zuordnung eines Teilnehmerendgerätes zu einem System oder einer Schicht kann abhängig von dem Dienst bzw. der Dienstekombination und/oder von der Geschwindigkeit des Teilnehmerendgerätes erfolgen. Die Steuerung der Intersystem-Verbindungsweiterschaltung ist somit eine Funktionalität der gemeinsamen Funkressourcen-Verwaltung. Im folgenden wird nurmehr der Fall einer Intersystem-Verbindungsweiterschaltung betrachtet, die beschriebenen Funktionalitäten und Mechanismen sind jedoch in gleicher Weise auf Intrasystem-Verbindungsweiterschaltungen beispielsweise zwischen hierarchischen Ebenen eines System anwendbar.

Für die Entscheidung über eine Intersystem-Verbindungsweiterschaltung sind folgende Informationen erforderlich bzw. sinnvoll, die von der gemeinsamen Funkressourcen-Verwaltung bzw. der zentralen funktionalen Einheit berücksichtigt werden. Dieses ist zum einen der Dienst bzw. die Dienste und gegebenenfalls die Geschwindigkeit des Teilnehmerendgerätes. Weiterhin müssen benachbarte Funkzellen zur Verfügung stehen, zu denen die Weiterschaltung erfolgen kann. Die jeweilige aktuelle Verbindungsqualität (radio link quality) der versorgenden und benachbarten Funkzellen sowie deren Ziel-Verbindungsqualität sind weitere Parameter, die bekannt sein sollten. Weiterhin sollte die jeweilige aktuelle Funkzelllast und die entsprechende Ziel-Funkzelllast der versorgenden und benachbarten Funkzellen bekannt sein, wobei diese zusätzlich dienste- und gegebenenfalls geschwindigkeitsspezifisch bestimmt werden können.

Folgende Informationen sind den dezentralen funktionalen Einheiten vorhanden. Der oder die Dienste des Teilnehmerendgerätes werden bei dem Verbindungsaufbau vom Zentralnetz (Core Network) signalisiert. Mögliche Ziele zur Intersystem-Verbindungsweiterschaltung, Verbindungsqualitäts-Ziele und eine jeweilige maximale Funkzelllast der versorgenden Funkzellen werden von dem Operations- und Wartungszentrum vorgegeben. Die jeweiligen aktuelle Verbindungsqualität zu den versorgenden und den benachbarten Funkzellen sind durch signalisierte Messungen der Teilnehmerendgeräte bekannt. Die aktuellen Lastpegel der versorgenden Funkzellen sind durch signalisierte Messungen der Basisstationen (Node B bzw. BTS) der Funkzellen bekannt.

Unbekannt sind in den dezentralen funktionalen Einheiten die aktuelle dynamische Ziel-Last der versorgenden Funkzellen sowie die aktuelle Ziel-Last und Last der benachbarten Funkzellen. Das Fehlen des ersten Parameters führt nachteilig zu einer Unsicherheit, wann eine Verbindungsweiterschaltung erfolgen soll, und das Fehlen der zweiten Parameter erschwert die Entscheidung, in welche Funkzelle die Weiterschaltung erfolgen soll. In den einleitend beschriebenen bekannten Verfahren werden die Ziel-Lasten von dem O&M vorgegeben, welches eine nur suboptimale Intersystem-Lastverteilung ermöglicht, währenddessen die Ziel-Last und die aktuelle Last unbekannt sind, die Verbindungsweiterschaltung also ohne dieses Wissen durchgeführt werden muss.

Nach der erfindungsgemäßen Lösung werden die Parameter in der zentralen funktionalen Einheit zusammengeführt und den dezentralen funktionalen Einheiten zur Verfügung gestellt. Dabei können beispielsweise die Ziel-Lasten nach Bedarf dynamisch mitgeteilt werden, beispielsweise mittels abstrakter Werte (0%...100%), System-, Schicht- oder Funkzell-, Dienst- und/oder Geschwindigkeits-spezifisch. Weiterhin kann die Differenz zwischen den Lastwerten und den Ziel-Werten durch eine Dienst- und/oder Geschwindigkeits-spezifische Rangfolge der benachbarten Funkzellen mitgeteilt werden, beispielsweise durch die Kennzeichnung "Weiterschaltung ist gewünscht, erlaubt, nicht erwünscht, verboten".

Die Funktion der gemeinsamen Funkressourcen-Verwaltung bzw. der zentralen funktionalen Einheit besteht zunächst in einem Anfordern von Lastmessungen von den dezentralen funktionalen Einheiten und Zusammenführen der Messergebnisse. Anschließend entscheidet sie über Funkzell- und gegebenenfalls Dienste-spezifische Ziel-Lasten. Die dezentralen funktionalen Einheiten informiert sie nachfolgend über die Ziel-Lasten der jeweils zugeordneten Funkzellen. Weiterhin bestimmt sie Funkzell- und gegebenenfalls Dienste-spezifische Rangfolge-Werte und informiert die dezentralen funktionalen Einheiten über die jeweiligen Rangfolgen der benachbarten Funkzellen.

Die Funktion der dezentralen funktionalen Einheit besteht in der Durchführung von Messungen, wie sie von der zentralen funktionalen Einheit angefordert wurden. Weiterhin akzeptiert sie die von der zentralen funktionalen Einheit signalisierte Ziel-Lasten für die von ihr gesteuerten Funkzellen sowie die signalisierte Rangfolge der benachbarten Funkzellen: Unter Berücksichtigung dieser Informationen entscheidet sie autonom über eine Intersystem-Verbindungsweiterschaltung.

Vorteilhaft gibt die zentrale funktionale Einheit also nur die Verfahrensweise durch eine Vorgabe von Ziel-Werten und Funkzell-Rangfolgen vor. Diese Parameter sind nicht echtzeitabhängig und die Signalisierungslast auf den Schnittstellen zwischen der zentralen und den dezentralen funktionalen Einheiten ist begrenzt. Weiterhin sind nur geringe Zuverlässigkeitsanforderungen an die zentrale funktionale Einheit zu stellen, da die dezentralen funktionalen Einheiten autonom arbeiten können, beispielsweise indem sie als Parameter Grundwerte (default values) oder die letzten von der zentralen funktionalen Einheit signalisierten Parameter verwenden. Die Implementierung kann sehr flexibel gestaltet werden. So ist die zentrale funktionale Einheit sowohl auf einem zentralen Server als auch verteilt auf mehrere Systemkomponenten realisierbar. Die Schnittstelle zwischen der zentralen und den dezentralen Einheiten kann standardisiert werden, die in den dezentralen Einheiten verwendeten Algorithmen und Entscheidungsstrategien können dahingegen Hersteller- oder Betreiber-spezifisch implementiert werden.

## Patentansprüche

1. Verfahren zur Verwaltung von Funkressourcen in einem Funk-Kommunikationssystem, bei dem
ein erstes Funk-Kommunikationssystem eine erste dezentrale funktionale Einheit (serving RRM function) zur Verwaltung von Funkressourcen aufweist, und ein zweites Funk-Kommunikationssystem eine zweite dezentrale funktionale Einheit (neighbouring RRM function) zur Verwaltung von Funkressourcen aufweist,
die erste und die zweite dezentrale funktionale Einheit jeweils Informationen bezüglich einer Auslastung (load measurements) der Funkressourcen zu einer zentralen funktionalen Einheit zur gemeinsamen Funkressourcen-Verwaltung (CRRM function) signalisieren, und
die zentrale funktionale Einheit (CRRM function) diese Informationen (load measurements) auswertet und Informationen bezüglich einer Ziel-Auslastung (load targets) zu zumindest einer der dezentralen funktionalen Einheiten signalisiert, die bei einer Intersystem-Verbindungsweiterschaltung (ISHO) von der dezentralen funktionalen Einheit (RRM function) berücksichtigt werden.

2. Verfahren zur Verwaltung von Funkressourcen in einem Funk-Kommunikationssystem, bei dem
ein erstes Funk-Kommunikationssystem eine erste dezentrale funktionale Einheit (serving RRM function) zur Verwaltung von Funkressourcen aufweist, und ein zweites Funk-Kommunikationssystem eine zweite dezentrale funktionale Einheit (neighbouring RRM function) zur Verwaltung von Funkressourcen aufweist,
die erste und die zweite dezentrale funktionale Einheit jeweils Informationen bezüglich einer Auslastung (load measurements) der Funkressourcen zu einer zentralen funktionalen Einheit zur gemeinsamen Funkressourcen-Verwaltung (CRRM function) signalisieren, und
die zentrale funktionale Einheit (CRRM function) diese Informationen (load measurements) auswertet, eine Rangfolge von potenziellen Zielen zur Steuerung einer Intersystem-Verbindungsweiterschaltung (ISHO) bestimmt, und diese Rangfolge zumindest einer der dezentralen funktionalen Einheiten (RRM function) zur Verfügung stellt.

3. Verfahren nach Anspruch 1 oder 2, wobei
die Funk-Kommunikationssysteme eine gleiche oder unterschiedliche Zugangstechnologien unterstützen.

4. Verfahren nach einem vorhergehenden Anspruch, bei dem
die Informationen bezüglich der Auslastung (load measurements) von der zentralen funktionalen Einheit angefordert werden.

5. Verfahren nach einem vorhergehenden Anspruch, bei dem
die Ziel-Auslastung und/oder die Rangfolge funkzell-, dienste- und/oder geschwindigkeitsspezifisch von der zentralen funktionalen Einheit definiert wird.

6. Verfahren nach einem vorhergehenden Anspruch, bei dem
die dezentralen funktionalen Einheiten (RRM function) in funktionale Untereinheiten aufgespalten sind, wobei mobile funktionale Untereinheiten (mobile RRM function) eine Entscheidung über einen Zeitpunkt und/oder ein Ziel einer Intersystem-Verbindungsweiterschaltung treffen, und direkt mit der zentralen funktionalen Einheit (CRRM function) kommunizierende netzwerkgebundene funktionale Untereinheiten (RRM function in RAN) anhand der von der zentralen funktionalen Einheit (CRRM function) erhaltenen Informationen Regeln und/oder Parameter für die Intersystem-Verbindungsweiterschaltung definieren,
die netzwerkgebundenen funktionalen Untereinheiten (RRM function in RAN) die Regeln und/oder Parameter den mobilen funktionalen Untereinheiten (mobile RRM function) signalisieren, und
die mobilen funktionalen Untereinheiten (mobile RRM function) diese Regeln und/oder Parameter bei der Intersystem-Verbindungsweiterschaltung berücksichtigen.

7. Verfahren nach Anspruch 6, wobei
die mobilen funktionalen Untereinheiten (mobile RRM function) in Mobilstationen verwirklicht sind.

8. Dezentrale funktionale Einheit (serving RRM function) eines Kommunikationssystems zum Verwalten von Funkressourcen, aufweisend Mittel zum Signalisieren von Informationen bezüglich einer Auslastung (load measurements) der Funkressourcen zu einer zentralen funktionalen Einheit zur gemeinsamen Funkressourcen-Verwaltung (CRRM function) und zum Berücksichtigen von von der zentralen funktionalen Einheit signalisierten Informationen (load measurements) bezüglich einer Ziel-Auslastung (load targets) für eine Intersystem-Verbindungsweiterschaltung (ISHO).

9. Dezentrale funktionale Einheit (serving RRM function, neighbouring RRM function) eines Kommunikationssystems zum Verwalten von Funkressourcen, aufweisend Mittel zum Signalisieren von Informationen bezüglich einer Auslastung (load measurements) der Funkressourcen zu einer zentralen funktionalen Einheit zur gemeinsamen Funkressourcen-Verwaltung (CRRM function) und zum Berücksichtigen einer von der zentralen funktionalen Einheit signalisierten Rangfolge von potenziellen Zielen für eine Intersystem-Verbindungsweiterschaltung (ISHO).

10. Zentrale funktionale Einheit zur gemeinsamen Funkressourcen-Verwaltung (CRRM), aufweisend Mittel zum Empfangen von signalisierten Informationen bezüglich einer jeweiligen Auslastung (load measurements) von Funkressourcen von einer ersten (serving RRM function) und einer zweiten dezentralen funktionalen Einheit (neighbouring RRM function) zur Verwaltung von Funkressourcen, zum Auswerten der empfangenen Informationen (load measurements) sowie zum Signalisieren von Informationen bezüglich einer Ziel-Auslastung (load targets) zu zumindest einer der dezentralen funktionalen Einheiten signalisiert zur Berücksichtigung bei einer Intersystem-Verbindungsweiterschaltung (ISHO).

11. Zentrale funktionale Einheit zur gemeinsamen Funkressourcen-Verwaltung (CRRM), aufweisend Mittel zum Empfangen von signalisierten Informationen bezüglich einer jeweiligen Auslastung (load measurements) von Funkressourcen von einer ersten (serving RRM function) und einer zweiten dezentralen funktionalen Einheit (neighbouring RRM function) zur Verwaltung von Funkressourcen, zum Auswerten der empfangenen Informationen (load measurements), zum Bestimmen einer Rangfolge von potenziellen Zielen zur Steuerung einer Intersystem-Verbindungsweiterschaltung (ISHO) sowie zum Signalisieren dieser Rangfolge zu zumindest einer der dezentralen funktionalen Einheiten.

12. Zentrale funktionale Einheit nach Anspruch 10 oder 11, welche
in einem zentralen Netzwerkknoten oder in mehreren miteinander kommunizierenden zentralen Netzwerkknoten verwirklicht ist.

13. Zentrale funktionale Einheit nach Anspruch 10 oder 11, welche
in zumindest einem Netzwerkknoten verwirklicht ist, in dem bereits eine dezentrale funktionale Einheit (RRM function) verwirklicht ist.

14. Dezentrale funktionale Einheit (serving RRM function) nach Anspruch 8 oder 9, welche
zumindest in Teilen in einer Mobilstation verwirklicht ist, derart ausgestaltet, dass die in der Mobilstation verwirklichten Teile von der zentralen funktionalen Einheit (CRRM function) signalisierte Informationen bezüglich Auslastungen von Funkressourcen, Ziel-Auslastungen und/oder Rangfolgen empfangen, und die Mobilstation an der Entscheidung über einen Zeitpunkt und/oder ein Ziel einer Intersystem-Verbindungsweiterschaltung (ISHO) beteiligt wird.

## Claims

1. Management method for radio resources in a radio communication system, in which
a first radio communication system features a first local functional unit (serving RRM function) for managing radio resources and a second radio communication system features a second local functional unit (neighbouring RRM function) for managing radio resources,
the first and the second local functional unit each signal information relating to load measurements of the radio resources to a central functional unit for common radio resources management (CRRM function), and
The central functional unit (CRRM function) evaluates this information (load measurements) and signals information relating to a load target to at least one of the local functional units which is then taken into account for an Inter System handover (ISHO) by the local functional unit (RRM function) .

2. Management method for radio resources in a radio communication system, in which
a first radio communication system features a first local functional unit (serving RRM function) for managing radio resources and a second radio communication system features a second local functional unit (neighbouring RRM function) for managing radio resources,
the first and the second local functional unit each signal information relating to load measurements of the radio resources to a central functional unit for common radio resources management (CRRM function), and
the central functional unit (CRRM function) evaluates this information (load measurements), determines a ranking of potential targets for controlling and Inter System handover (ISHO) and makes this ranking available to at least one of the local functional units (RRM function).

3. Method in accordance with claim 1 or 2, with
the radio communication systems supporting the same or different access technologies.

4. Method in accordance with one of the previous claims in which information relating to load measurements is requested by the central functional unit.

5. Method in accordance with a previous claim, in which
the load target and/or the ranking are defined by the central functional unit for specific radio cells, services and/or speeds.

6. Method in accordance with a previous claim, in which
the local functional units (RRM function) are divided into functional subunits, with mobile functional subunits (mobile RRM function) making a decision about a time and/or a target of an Inter System handover and network-linked functional subunits (RRM function in RAN) communicating directly with the central functional unit (CRRM function) define roles and/or parameters for Inter System handover on the basis of information received from the central functional unit (CRRM function),
The network-linked functional subunits (RRM function in RAN) signal the rules and/or parameters to the mobile functional subunits (mobile RRM function), and
the mobile functional subunits (mobile RRM function) take account of these rules and/or parameters for the Inter System handover.

7. Method in accordance with claim 6, with
the mobile functional subunits (mobile RRM function) being implemented in mobile stations.

8. Local functional unit (serving RRM function) of a communication system for management of radio resources featuring means for signalling of information relating to a load (load measurements) of the radio resources to a central functional unit for common radio resource management (CRRM function) and for taking account of information signalled by the central functional unit (load measurements) relating to a target load (load targets) for an Inter System handover (ISHO).

9. Local functional unit (serving RRM function) of a communication system for management of radio resources featuring means for signalling of information relating to a load (load measurements) of the radio resources to a central functional unit for common radio resource management (CRRM function) and for taking account of a ranking signalled by the central functional unit of potential targets for an Inter System handover (ISHO).

10. Central functional unit for common radio resource management (CRRM), featuring means for receiving signalled information relating to a respective load (load measurements) of radio resources from a first (serving RRM function) and a second local functional unit (neighbouring RRM function) for management of radio resources, for evaluation of the received information (load measurements) and also for signalling information relating to a target load (load targets) to at least one of the local functional units for taking into account during an Inter System handover (ISHO)

11. Central functional unit for common radio resource management (CRRM), featuring means for receiving signalled information relating to a respective load (load measurements) of radio resources from a first (serving RRM function) and a second local functional unit (neighbouring RRM function) for management of radio resources, for evaluation of the received information (load measurements, for determining a ranking of potential targets for control of an Inter System handover (ISHO) and for signalling this ranking to at least one of the local functional units.

12. Central functional unit in accordance with claim 10 or 11, which
is implemented in a central network node or in a number of central network nodes communicating with one another.

13. Central functional unit in accordance with claim 10 or 11, which
is implemented in at least one network node in which a local functional unit (RRM function) is already implemented.

14. Local functional unit (serving RRM function) in accordance with claim 8 or 9, which
is implemented at least in parts in a mobile station, designed such that the parts implemented in the mobile station receive information signalled from the central functional unit (CRRM function) relating to loads of radio resources, load targets and/or rankings, and the mobile station is involved in the decision about a time and/or a target of an Inter System handover (ISHO).

## Revendications

1. Procédé pour la gestion de ressources radio dans un système de communication radio, dans lequel
un premier système de communication radio présente une première unité fonctionnelle décentralisée (serving RRM function) pour la gestion de ressources radio, et un second système de communication radio une seconde unité fonctionnelle décentralisée (neighbouring RRM function) pour la gestion de ressources radio,
la première et la seconde unités fonctionnelles décentralisées signalant respectivement des informations concernant une charge (load measurements) des ressources radio à une unité fonctionnelle centralisée pour la gestion commune de ressources radio (CRRM function), et
l'unité fonctionnelle centralisée (CRRM function) analyse ces informations (load measurements) et signale des informations concernant une charge cible (load targets) à au moins l'une des unités fonctionnelles décentralisées, qui sont prises en compte lors d'un transfert de communication intersystèmes (ISHO) par l'unité fonctionnelle décentralisée (RRM function).

2. Procédé pour la gestion de ressources radio dans un système de communication radio, dans lequel
un premier système de communication radio présente une première unité décentralisée (serving RRM function) pour la gestion des ressources radio, et un second système de communication radio présente une seconde unité fonctionnelle décentralisée (neighbouring RRM function) pour la gestion des ressources radio,
la première et la seconde unités fonctionnelles décentralisées signalent à chaque fois des informations concernant une charge (load measurements) des ressources radio à une unité fonctionnelle centralisée pour la gestion commune des ressources radio (CRRM function), et
l'unité fonctionnelle centralisée (CRRM function) analyse ces informations (load measurements), détermine un ordre de priorité d'objectifs potentiels pour la commande d'un transfert de communication intersystèmes (ISHO), et met cet ordre de priorité à la disposition d'au moins l'une des unités fonctionnelles décentralisées (RRM function).

3. Procédé selon la revendication 1 ou 2, les systèmes de communication radio supportant une technologie d'accès identique ou des technologies d'accès différentes.

4. Procédé selon l'une des revendications précédentes, dans lequel les informations concernant la charge (load measurements) sont demandées par l'unité fonctionnelle centralisée.

5. Procédé selon une revendication précédente, dans lequel la charge cible et/ou l'ordre de priorité est/sont défini(s) par l'unité fonctionnelle centralisée de façon spécifique à la cellule radio, au service et/ou à la vitesse.

6. Procédé selon une revendication précédente, dans lequel les unités fonctionnelles décentralisées (RRM function) sont divisées en sous-unités fonctionnelles, des sous-unités fonctionnelles mobiles (mobile RRM function) prenant une décision relative à un moment et/ou à un objectif d'un transfert de communication intersystèmes, et des sous-unités fonctionnelles (RRM function in RAN) liées au réseau et communiquant directement avec l'unité fonctionnelle centralisée (CRRM function) définissant à l'aide des informations reçues de l'unité fonctionnelle centralisée (CRRM function) des règles et/ou des paramètres pour le transfert de communication intersystèmes,
les sous-unités fonctionnelles (RRM function in RAN) liées au réseau signalant les règles et/ou les paramètres des sous-unités fonctionnelles mobiles (mobile RRM function), et
les sous-unités fonctionnelles mobiles (mobile RRM function) tenant compte de ces règles et/ou paramètres dans le transfert de communication intersystèmes.

7. Procédé selon la revendication 6,
les sous-unités fonctionnelles mobiles (mobile RRM function) étant réalisées dans des stations mobiles.

8. Unité fonctionnelle décentralisée (serving RRM function) d'un système de communication pour la gestion de ressources radio, présentant des moyens pour la signalisation d'informations concernant une charge (load measurements) des ressources radio à une unité fonctionnelle centralisée pour la gestion commune des ressources radio (CRRM function) et pour la prise en compte d'informations (load measurements) signalées par l'unité fonctionnelle centrale concernant une charge cible (load targets) pour un transfert de communication intersystèmes (ISHO).

9. Unité fonctionnelle décentralisée (serving RRM function, neighbouring RRM function) d'un système de communication pour la gestion de ressources radio, présentant des moyens pour la signalisation d'informations concernant une charge (load measurements) des ressources radio à une unité fonctionnelle centralisée pour la gestion commune des ressources radio (CRRM function) et pour la prise en compte d'un ordre de priorité, signalé par l'unité fonctionnelle centralisée, de cibles potentielles pour un transfert de communication intersystèmes (ISHO).

10. Unité fonctionnelle centralisée pour la gestion commune de ressources radio (CRRM), présentant des moyens pour la réception d'informations signalées concernant une charge respective (load measurements) de ressources radio par une première unité fonctionnelle décentralisée (serving RRM function) et une seconde unité fonctionnelle décentralisée (neighbouring RRM function) pour la gestion de ressources radio, pour l'analyse des informations reçues (load measurements) ainsi que pour la signalisation d'informations concernant une charge cible (load targets) à au moins l'une des unités fonctionnelles décentralisées signalées pour la prise en compte lors d'un transfert de communication intersystèmes.

11. Unité fonctionnelle centralisée pour la gestion commune de ressources radio (CRRM), présentant des moyens pour la réception d'informations signalées concernant une charge respective (load measurements) de ressources radio par une première unité fonctionnelle décentralisée (serving RRM function) et par une seconde unité fonctionnelle décentralisée (neighbouring RRM function) pour la gestion de ressources radio, pour l'analyse des informations reçues (load measurements), pour la détermination d'un ordre de priorité de cibles potentielles pour la commande d'un transfert de communication intersystèmes (ISHO) ainsi que pour la signalisation de cet ordre de priorité à au moins l'une des unités fonctionnelles décentralisées.

12. Unité fonctionnelle centralisée selon la revendication 10 ou 11, qui est réalisée dans un noeud de réseau central ou dans plusieurs noeuds de réseau centralisés communiquant les uns avec les autres.

13. Unité fonctionnelle centralisée selon la revendication 10 ou 11, qui est réalisée dans au moins un noeud de réseau, dans lequel est réalisée déjà une unité fonctionnelle décentralisée (RRM function).

14. Unité fonctionnelle décentralisée (serving RRM function) selon la revendication 8 ou 9, qui est réalisée au moins dans des parties dans une station mobile, conçue de telle sorte que les parties réalisées dans la station mobile reçoivent des informations signalées par l'unité fonctionnelle centralisée (CRRM function) concernant des charges de ressources radio, des charges cibles et/ou des ordres de priorité, et la station mobile étant impliquée dans la décision concernant un moment et/ou un objectif d'un transfert de communication intersystèmes (ISHO).
